# EUROPEAN PATENT SPECIFICATION

(11) **EP 1 526 369 B1**
(45) Date of publication and mention of the grant of the patent: **14.06.2006**
(21) Application number: 04028367.3
(22) Date of filing: 20.11.2000
(51) Int. Cl.: G01N 1/28, G01N 1/31

(54) **Coverslip and method for applying a coverslip to a glass slide**
Deckglas sowie Verfahren zu seiner Aufbringung auf einen Objektträger
Couvre-objet et procédé de recouvrement d'une lamelle de verre

(30) Priority: 22.11.1999 US 166771 P; 31.03.2000 US 193797 P
(43) Date of publication of application: 27.04.2005
(62) Divisional of application: 00980564.9
(73) Proprietor: VENTANA MEDICAL SYSTEMS, INC., Tucson, AZ 85705 (US)
(72) Inventor: Crouch, Samuel W., Boulder Colorado 80303 (US); Reinhardt, Kurt, Tucson Arizona 85710 (US); Richards, William L., Tucson Arizona 85737 (US)
(74) Representative: Müller-Boré & Partner Patentanwälte

(56) References cited:
- US-A- 4 146 414
- US-A- 5 661 029
- US-A- 5 939 251

## Description

### CROSS REFERENCE

The benefit of U.S. Provisional Application Nos. 60/166,771, filed November 22, 1999, and 60/193,797, filed March 31, 2000, is hereby claimed.

### BACKGROUND OF THE INVENTION

The present invention relates generally to new and improved coverslip and more particularly to a stackable non-stick coverslip for use, for example, in an automated coverslipper apparatus or system.

As is well known in the medical art, a tissue specimen, such as a human tissue specimen, is mounted on a conventional glass slide for diagnostic purposes. The glass slide, carrying the tissue section under examination, is subjected to certain reagents and stained in accordance with an established protocol in order to facilitate characterization and diagnosis of the tissue sample. Often the glass slide is "covered" with a chemical coverslip or a glass coverslip to substantially avoid contamination and to permit long-term archiving of the slide.

One presently available glass coverslip has the same configuration as a conventional glass slide, *i.e.,* substantially rectangular. The length and thickness are, by comparison, significantly reduced to decrease production costs. Another available glass coverslip is substantially circular, having a diameter corresponding to the width of a conventional glass slide.

Glass coverslips may be placed upon the tissue-carrying slide manually or by an automated coverslipper. One such automated system is shown in U.S. Patent No. 3,833,449. Typically the glass coverslips are vertically stacked in a housing, and an individual coverslip is placed upon the glass slide by either a piston-like mechanism (which pushes the uppermost coverslip in the housing onto the glass slide) or a vacuum mechanism (which lifts the top coverslip for appropriate placement and release).

Moisture between adjacent coverslips in the housing substantially interferes with the covering process and equipment. That is, condensation interposed adjacently stacked coverslips causes adherence, or "sticking," such that more than one coverslip is extracted by a single covering operation. The result is often one or more broken coverslips and a certain amount of "downtime" for maintenance of the system.

For archiving, it is desirable to permanently affix the coverslip to the glass slide. This allows the analyzed specimen to be stored for future reference thereto. Glues are typically used to permanently bond the coverslip to the glass slide, over the stained tissue sample. Such a glue is usually applied manually to either the coverslip or glass slide.

There is a continuing need for an improved coverslip that avoids or overcomes the foregoing deficiencies.

US 4, 146,414 discloses a method of mechanically applying covers-slips onto slides provided with specimens for microscopic examination, wherein the slides are fed to a coating station at which a solvent film is applied and then fed to an application station wherein the transparent plastic cover-slips, which have adhesive layer on the sides thereof arranged to bear against the solvent layer, are applied onto the solvent layer.

### SUMMARY OF THE INVENTION

In a principal aspect, the present invention is a stackable non-stick coverslip as defined by claim 1. Preferably, the coverslip includes a glass plate and a protuberance on the upper, substantially planar surface thereof. The protuberance provides an elevational alternation that, in cooperation with the glass plate, defines a supporting plane for an adjacent coverslip. The supporting plane is acutely oriented to top surface of the glass plate. In a second aspect, the coverslip includes an adhesive on the lower surface of the glass plate. Upon solvent activation, the adhesive secures, or affixes, the coverslip to a conventional glass slide, thereby covering and protecting the stained tissue sample. The invention also relates to a method for applying a cover slip to a glass slide as defined in claim 10.

It is thus an object of the present invention to provide a new and improved coverslip. Another object is a stackable coverslip for an automated coverslip applicator, wherein adherence or sticking of adjacently stacked coverslips is substantially avoided. Still another object is a pre-glued stackable coverslip such that the coverslip may be adhered to a glass slide, thereby protecting the analyzed tissue sample. Yet another object of the present invention is a readily and inexpensively manufactured, pre-glued, stackable and non-stick coverslip.

These and other features, objects and advantages of the present invention are set forth or apparent in the following detailed description.

### BRIEF DESCRIPTION OF THE DRAWING

Various preferred embodiments of the present invention are described herein with reference to the drawing herein:
FIGURE 1 is a simplified, partial cut-away side view of a coverslipper apparatus for use with the present invention, and illustrating a first preferred embodiment thereof;
FIGURE 2 is a perspective view of the glass coverslip shown in FIGURE 1;
FIGURE 3 is a perspective view of a second preferred embodiment;
FIGURE 4 illustrates the coverslipper apparatus of FIGURE 1 with the second preferred embodiment shown in FIGURE 3;
FIGURES 5A and B are partial top views of a coverslip, illustrating additional protuberance configurations; and
FIGURE 6 is a perspective bottom view of the coverslip shown in FIGURE 2.

### DETAILED DESCRIPTION OF VARIOUS PREFERRED EMBODIMENTS

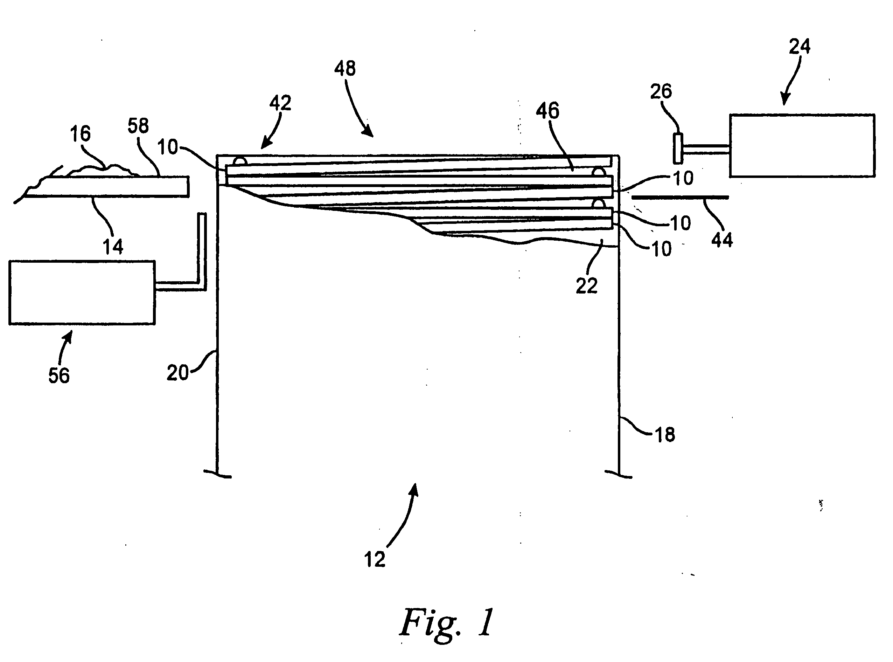

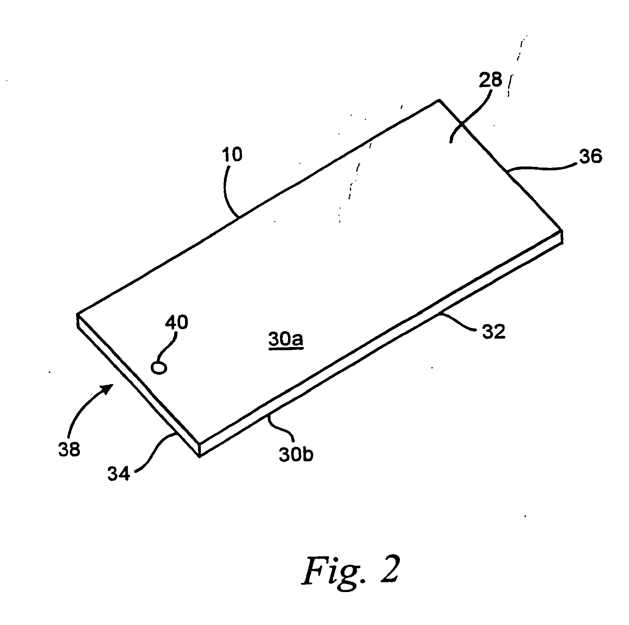

With reference to FIGURES 1 and 2, a preferred embodiment of the present invention is shown as a glass coverslip 10 for use in an automated coverslipper, generally designated 12. The coverslipper 12 places the coverslip 10 upon a conventional glass slide 14, having a substantially rectangular configuration and carrying a tissue specimen 16. The coverslip 10 substantially avoids contamination and facilitates processing of the specimen 16.

The coverslipper 12 includes a magazine 18, having an open dispensing end 20, adjacent and facing the glass slide 14. The magazine 18 defines a substantially rectangular chamber 22, wherein the coverslips 10 are stacked in a substantially vertical arrangement. A conventional transfer mechanism, generally designated 24, moves the top, or uppermost, coverslip 10 from the chamber 22, onto the awaiting glass slide 14. For purposes of illustration only, transfer mechanism 24 includes a piston 26, adapted to horizontally engage and "push" the top coverslip 10 in the magazine 18 onto the glass side 14. With each "push," the stack of coverslips 10 advances upwardly in a conventional manner to properly align the next coverslip 10 with respect to the piston 26.

Referring now to FIGURES 1 and 2, the coverslip 10 includes a glass plate 28, having substantially planar top and bottom surfaces 30A, 30B, and a periphery 32. In this preferred embodiment, the glass plate 28 has a substantially rectangular configuration, with a length and a thickness slightly less than the conventional glass slide 14. The plate 28 defines opposed ends 34, 36, respectively, corresponding to the width of the glass slide 14.

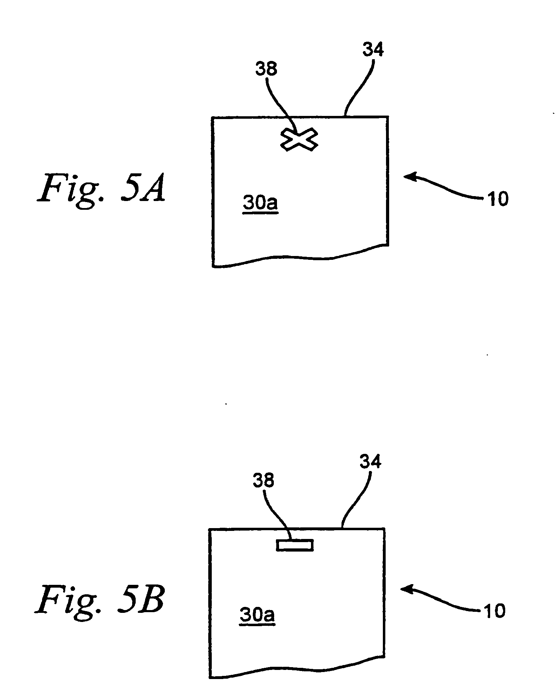

The glass coverslip 10 further includes at least one protuberance, generally designated 38, applied to, or mounted on, the top surface 30A, near the periphery 32. In this preferred embodiment, the protuberance 38 is a raised dot 40, centrally located adjacent the opposed end 34 of the glass plate 28. As shown in FIGURES 5A and B, the protuberance 38 may be in the form of an "X" or a bar.

Referring again to FIGURE 1, the raised dot 40 provides an elevational alternation, generally designated 42, to the substantially planar top surface 30A of the glass plate 28. This alteration 42 defines a supporting plane 44 that is acutely oriented with respect to the planar top surface 30A. As used herein, the term "acutely oriented" and obvious modifications thereof mean an angle of 0 to 3 degrees. In this preferred embodiment, the supporting plane 44 is further defined by the glass plate 28, or more particularly the opposed end 36 thereof, as the adjacent coverslip 10 rests upon the glass plate 28, at one end, and upon the raised dot 40, at the other end.

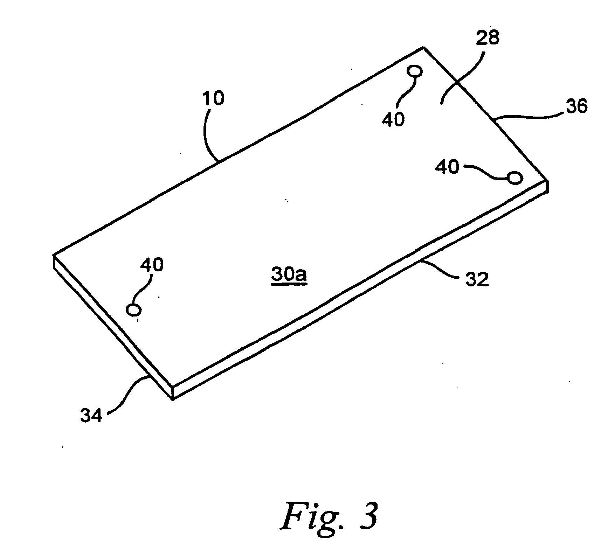

In the preferred embodiment shown in FIGURE 3, there are three protuberances 38 in the form of raised dots 40 -- one centrally located along the end 34 and two at the edges of the other end 36. The supporting plane 44, as defined by the three raised dots 40, is substantially parallel to the top surface 30A of the glass plate 28.

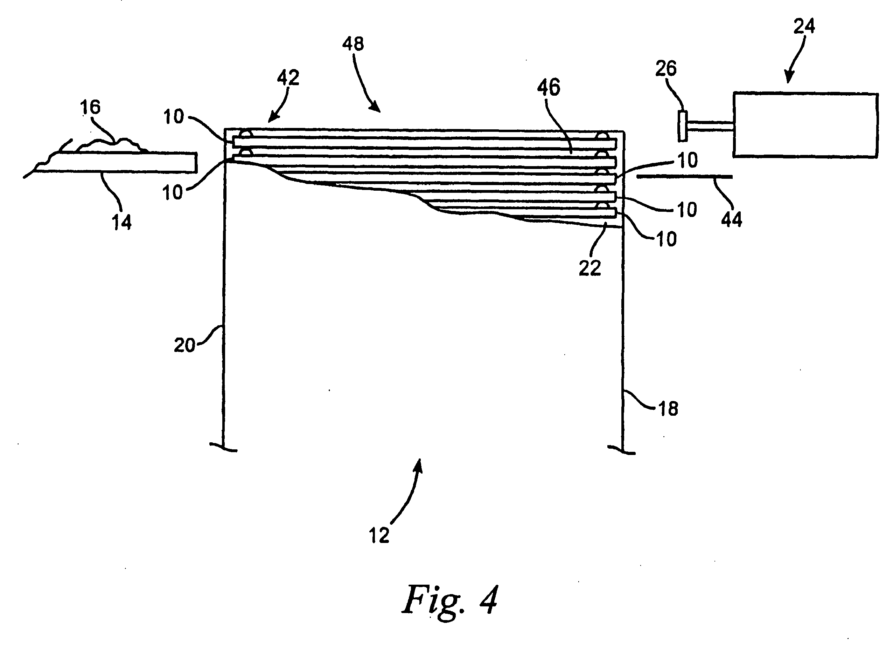

The supporting plane 44 establishes a gap 46 between vertically adjacent coverslips 10 in the magazine 18. The upper coverslip 10 rests along the supporting plane 44, substantially reducing the surface contact between the adjacently stacked coverslips 10 and substantially reducing adherence or sticking therebetween. The gap 46 further increases airflow, thereby reducing the possibility of condensation. With respect to the preferred embodiment shown in of FIGURES 1 and 2, the gap 46 is tapered; in the preferred embodiment of FIGURES 3 and 4, adjacent coverslips 10 are substantially parallel, such that the gap 46 is not tapered.

The protuberance 38, whether the dot 40 or an "X" or a bar, is preferably a curable compound, having a flowable state and a cured state. In one preferred embodiment, the dot 40 is a teflon paint which dries, or cures, in air. Once dried, the dot 40 has a substantially semi-circular shape, providing an elevational alteration 42 preferably in the range of 0,0127 - 0,127 mm (0.0005 to 0.005 inches). (In the FIGURES 1-4, the height of the protuberance 38 is exaggerated for clarity.)

With reference again to FIGURE 1, alternating the pattern of the glass coverslips 10 in the magazine 18, such that the singular raised dot 40 of every other coverslip 10 is at the dispensing end 20 thereof, substantially avoids skewing. That is, the stacked coverslips 10 maintain a substantially vertical profile.

The various preferred embodiments of the coverslip 10 are readily packaged as a kit, generally designated 48. The kit 48 facilitates shipping and handling and readily drops into the magazine 18.

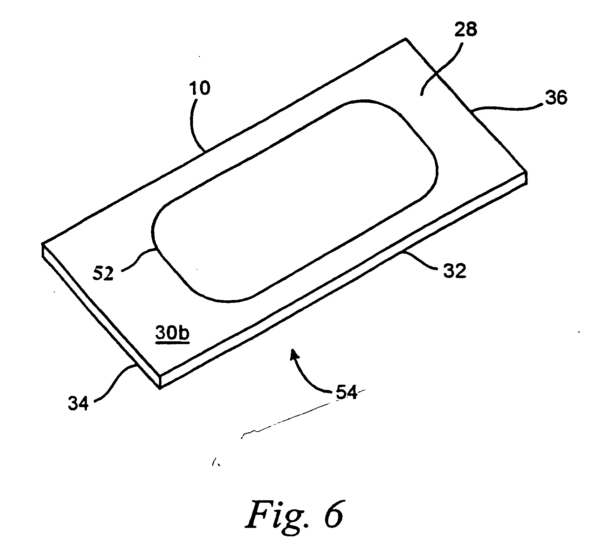

With reference now to FIGURE 6, the stackable non-stick coverslip 10 has an adhesive 52 applied to a central region, generally designated 54, of the bottom surface 30B. The adhesive 52 is preferably a liquid that dries, upon application to the coverslip 10, to a tackless or only slightly tacky state. The adhesive 52 is activated or partially dissolved by a solvent, prior to placement onto the glass slide 14 by the coverslipper 12. More particularly, the coverslipper 12 includes a dispensing system, generally designated 56, to apply the solvent to the bottom surface 30B of the coverslip 10 as it is "pushed" out of the magazine 18 and onto the glass side 14. In an example not covered by the claims, the dispensing system 56 may apply the solvent directly onto the glass slide 14. In another embodiment, the solvent is applied manually.

As the activated adhesive 52 again dries, the coverslip 10 is affixed or bonded to the top surface 58 of the glass slide 12. The glass slide 12 can then stored for future analysis and study or as a permanent record of the analysis preformed.

The adhesive 52 is preferably oil-based or water-insoluble, such that the solvent is nonaqueous, *i.e.,* hydrophobic or lipophilic. Acrylic copolymers such as Acryloid® A-21, commercially available from Rohm and Haas, Philadelphia, Pa., are suitable. Other suitable adhesives include olefin-based materials, *e.g.,* vinyl and acrylate based polymers; cellulose acetates; cyanoacrylates; silicone-containing materials including silane- and siloxane-terminated monomer based polymers; polytetrafluoroethylene based adhesives; and hydrocarbon based polymers. Suitable solvents to render the adhesive 52 tacky include aromatic hydrocarbons such as toluene, xylene, and benzene; silicones such as dimethicones, cyclomethicones and substituted siloxanes; aromatic and aliphatic hydrocarbons; alkyl esters; benzyl or alkyl benzoates; alkyl, alkoxyalkyl and glyceryl esters; and mixtures thereof. While an oil-based or water-insoluble solvent is preferred, a water-based solvent, such as Shur/Mount Liquid Mounting Medium (VWR Cat. No. 15148-062), may be utilized with certain stains.

The present invention substantially avoids the difficult task of maintaining an adhesive within the automated coverslipper 12. The equally difficult task of pumping an adhesive through the automated coverslipper 12 is also avoided.

Various preferred embodiments of the present invention have been described herein. It is to be understood that modifications and changes can be made without departing from the scope of the present invention, as defined by the following claims which are to be interpreted in view of the foregoing.

## Claims

1. A coverslip (10) comprising, in combination:
a glass plate (28) having a substantially planar top surface (30A) and a substantially planar bottom surface (30B);
an adhesive (52) which has been activated by a solvent, said adhesive (52) being provided on said substantially planar bottom surface.

2. A coverslip (10) as claimed in claim 1 further comprising at least one protuberance (38) on said substantially planar top surface (30A), said protuberance (38) providing an elevational alternation to said substantially planar top surface (30A), said elevational alternation defining a supporting plane (44) acutely oriented with respect to said substantially planar top surface (30A).

3. A coverslip (10) as claimed in claim 2 wherein said protuberance (38) is a paint.

4. A coverslip as claimed in claim 2 wherein said protuberance (38) is a curable compound deposited on said substantially planar top surface (30A).

5. A coverslip (10) as claimed in claim 4 wherein said protuberance (38) is a raised dot of a curable compound deposited on said substantially planar top surface in a substantially semi-circular configuration.

6. A coverslip (10) as claimed in claim 4 or 5 wherein said curable compound has a flowable state and a cured stated, said curable compound being deposited on the said substantially planar top surface in said flowable state and thereafter curing to said cured state.

7. A coverslip as claimed in anyone of claims 4 to 6 wherein said curable compound is a paint.

8. A coverslip as claimed in claim 7 wherein said paint is a teflon paint.

9. A coverslip as claimed in claim 1 to 8 wherein said solvent-activated adhesive is oil-based or water-insoluble.

10. A method for applying a coverslip (10) to a glass slide (14), said coverslip (10) comprising in combination a glass plate (28) having a substantially planar top surface (30A) and a substantially planar bottom surface (30B) and a solvent-activated adhesive (52) on said substantially planar bottom surface (30B),
said method comprising the steps of:
activating the adhesive (52) of said coverslip (10) by a solvent prior to a placement of said coverlsip (10) onto said glass slide (14);
placing said coverslip (10) onto said glass slide (14).

## Patentansprüche

1. Deckglas (10), umfassend in Kombination:
eine Glasplatte bzw. -scheibe (28), die eine im wesentlichen ebene obere Fläche bzw. Oberfläche (30A) und eine im wesentlichen ebene untere Fläche bzw. Bodenfläche (30B) aufweist;
einen Kleber bzw. Klebstoff (52), welcher durch ein Lösungsmittel aktiviert wurde, wobei der Kleber (52) auf der wesentlichen ebenen Bodenoberfläche bzw. Bodenfläche zur Verfügung gestellt ist.

2. Deckglas (10) nach Anspruch 1, weiterhin umfassend wenigstens einen Vorsprung (38) auf der im wesentlichen ebenen oberen Fläche (30A), wobei der Vorsprung (38) eine Änderung in der Höhe bzw. ansteigende wechselseitige Folge zu der im wesentlichen ebenen oberen Fläche (30A) zur Verfügung stellt, wobei die ansteigende wechselseitige Folge eine unterstützende bzw. Support- bzw. Unterstützungsebene (44) definiert, die in bezug auf die im wesentlichen ebene obere Fläche (30A) spitz bzw. spitzwinkelig orientiert ist.

3. Deckglas (10) nach Anspruch 2, wobei der Vorsprung (38) ein Lack bzw. Anstrich ist.

4. Deckglas nach Anspruch 2, wobei der Vorsprung (38) eine aushärtbare Verbindung bzw. Mischung ist, die auf der im wesentlichen ebenen oberen Fläche (30A) abgeschieden bzw. aufgebracht ist.

5. Deckglas (10) nach Anspruch 4, wobei der Vorsprung (38) ein erhöhter Punkt einer bzw. aus einer härtbaren Verbindung ist, die auf der im wesentlichen ebenen oberen Fläche in einer im wesentlichen halbkreisförmigen Konfiguration abgeschieden bzw. aufgebracht ist.

6. Deckglas (10) nach Anspruch 4 oder 5, wobei die aushärtbare Verbindung einen fließfähigen Zustand und einen gehärteten Zustand aufweist, wobei die aushärtbare Verbindung auf der im wesentlichen ebenen oberen Fläche in dem fließfähigen Zustand abgeschieden ist und danach zu dem gehärteten Zustand härtet bzw. aushärtet.

7. Deckglas nach einem der Ansprüche 4 bis 6, wobei die aushärtbare Verbindung ein Anstrich bzw. Lack ist.

8. Deckglas nach Anspruch 7, wobei der Anstrich ein Teflonanstrich ist.

9. Deckglas nach einem der Ansprüche 1 bis 8, wobei der durch ein Lösungsmittel aktivierte Kleber bzw. Klebstoff auf Öl basierend oder wasserunlöslich ist.

10. Verfahren zum Aufbringen eines Deckglases (10) auf einen Glasobjektträger (14), wobei das Deckglas (10) in Kombination eine Glasplatte (28), die eine im wesentlichen ebene obere Fläche bzw. Oberfläche (30A) und eine im wesentlichen ebene untere Fläche bzw. Bodenoberfläche (30B) aufweist, und einen durch ein Lösungsmittel aktivierten Kleber bzw. Klebstoff (52) auf der im wesentlichen ebenen Bodenoberfläche (30B) umfaßt,
wobei das Verfahren die Schritte umfaßt:
Aktiveren des Klebers (52) des Deckglases (10) durch ein Lösungsmittel vor einer Anordnung des Deckglases (10) auf dem Glasobjektträger (14);
Anordnen des Deckglases (10) auf dem Glasobjektträger (14).

## Revendications

1. Lamelle couvre-objet (10) comprenant, de manière associée :
une plaque de verre (28) présentant une surface supérieure sensiblement plane (30A) et une surface inférieure sensiblement plane (30B) ;
un adhésif (52) qui a été activé par un solvant, ledit adhésif (52) étant prévu sur ladite surface inférieure sensiblement plane.

2. Lamelle couvre-objet (10) selon la revendication 1, comprenant en outre au moins une protubérance (38) formée sur ladite surface supérieure sensiblement plane (30A), ladite protubérance (38) assurant une alternance d'élévation (42) à ladite surface supérieure sensiblement plane (30A), ladite alternance d'élévation (42) définissant un plan support (44) orienté avec un angle aigu par rapport à ladite surface supérieure sensiblement plane (30A).

3. Lamelle couvre-objet (10) selon la revendication 2, dans laquelle ladite protubérance (38) est à base de peinture.

4. Lamelle couvre-objet (10) selon la revendication 2, dans laquelle ladite protubérance (38) est à base de composé pouvant durcir, déposé sur ladite surface supérieure sensiblement plane (30A).

5. Lamelle couvre-objet (10) selon la revendication 4, dans laquelle ladite protubérance (38) est un plot surélevé (40) d'un composé pouvant durcir déposé sur ladite surface supérieure sensiblement plane (30A) en une configuration sensiblement semi-circulaire.

6. Lamelle couvre-objet (10) selon la revendication 4 ou 5, dans laquelle ledit composé présente un état fluide et un état durci, ledit composé pouvant durcir étant déposé sur ladite surface supérieure sensiblement plane (30A) dans ledit état fluide et durcissant ensuite dans ledit état durci.

7. Lamelle couvre-objet (10) selon l'une quelconque des revendications 4 à 6, dans laquelle ledit composé pouvant durcir est une peinture.

8. Lamelle couvre-objet (10) selon la revendication 7, dans laquelle ladite peinture est une peinture « Teflon ».

9. Lamelle couvre-objet (10) selon l'une quelconque des revendications 1 à 8, dans laquelle ledit adhésif activé par solvant est à base d'huile ou insoluble dans l'eau.

10. Procédé pour appliquer une lamelle couvre-objet (10) à une plaque porte-objet de verre (14), ladite lamelle couvre-objet (10) comprenant, de manière associée une plaque de verre (28) présentant une surface supérieure sensiblement plane (30A) et une surface inférieure sensiblement plane (30B) et un adhésif (52) activé par solvant sur ladite surface inférieure sensiblement plane (30B),
ledit procédé comprenant les étapes consistant à :
activer l'adhésif (52) de ladite lamelle couvre-objet (10) par un solvant avant de placer ladite lamelle couvre-objet (10) sur ladite plaque porte-objet de verre (14) ; et
placer ladite lamelle couvre-objet (10) sur ladite plaque porte-objet de verre (14).
